# EUROPÄISCHE PATENTSCHRIFT

(11) **EP 0 731 875 B1**
(45) Veröffentlichungstag und Bekanntmachung des Hinweises auf die Patenterteilung: **22.04.1998**
(21) Anmeldenummer: 94930184.0
(22) Anmeldetag: 17.10.1994
(51) Int. Cl.: F01N 3/20

(54) **VERFAHREN ZUR VERMINDERUNG DES SCHADSTOFFAUSSTOSSES EINES DIESELMOTORS MIT NACHGESCHALTETEM OXIDATIONSKATALYSATOR**
PROCESS FOR REDUCING POLLUTANT EMISSIONS OF A DIESEL ENGINE EQUIPPED WITH AN OXIDATION-TYPE CATALYTIC CONVERTER
PROCEDE DE REDUCTION DE L'EMISSION DE POLLUANTS D'UN MOTEUR DIESEL POURVU D'UN CONVERTISSEUR CATALYTIQUE A OXYDATION

(30) Priorität: 30.11.1993 DE 4340742
(43) Veröffentlichungstag der Anmeldung: 18.09.1996
(73) Patentinhaber: Emitec Gesellschaft für Emissionstechnologie mbH, 53797 Lohmar (DE)
(72) Erfinder: MAUS, Wolfgang, D-51429 Bergisch Gladbach (DE)
(74) Vertreter: Kahlhöfer, Hermann, Dipl.-Phys.
(86) Internationale Anmeldenummer: EP9403421
(87) Internationale Veröffentlichungsnummer: WO9515431

(56) Entgegenhaltungen:
- CH-A- 678 020
- DE-A- 3 919 343
- FR-A- 2 688 029
- GB-A- 2 134 407
- PATENT ABSTRACTS OF JAPAN vol. 17, no. 374 (M-1445) 14. Juli 1993 & JP,A,05 059 929 (NISSAN MOTOR CO LTD) 9. März 1993

## Beschreibung

Die vorliegende Erfindung betrifft ein Verfahren zur Verminderung des Schadstoffausstoßes eines Dieselmotors mit nachgeschaltetem Oxidationskatalysator bei Kaltstart, Teillast und/oder Leerlauf.

Nach dem Stand der Technik gibt es mehrere Verfahren, um den Schadstoffausstoß eines Dieselmotors zu vermindern. Dabei muß man zwei verschiedene Arten von Schadstoffen unterscheiden, nämlich gasförmige Schadstoffe und Partikel. Bei Dieselfahrzeugen wurden lange Zeit die Rußpartikel als die schädlichste Komponente angesehen, weshalb zahlreiche Vorrichtungen entwickelt wurden, um diese Rußpartikel aus dem Abgas zu entfernen. Aus der US-PS 4,404,795 ist dabei beispielsweise ein Filterkörper bekannt, welcher gasdurchlässig ist, jedoch Rußpartikel zurückhält. Um das Verstopfen dieses Filters durch eine übermäßige Ansammlung von Rußpartikeln zu vermeiden, wird der Filterkörper von Zeit zu Zeit in seinem vorderen Bereich durch einen elektrischen Heizer so weit aufgeheizt, daß die angesammelte Rußschicht sich entzündet und abbrennt. Um diesen Vorgang zu unterstützen kann in diesem Zustand zusätzliche Luft vor dem Filterkörper eingespeist werden.

Ein anderes Konzept der Schadstoffminderung von Dieselmotoren geht davon aus, daß die im Dieselabgas enthaltenen Kohlenwasserstoffe und das Kohlenmonoxid oxidiert werden müssen, um diesen Anteil an Schadstoffen zu beseitigen. Zu diesem Zweck werden bei Dieselmotoren ähnliche Oxidationskatalysatoren wie bei Ottomotoren eingesetzt, nämlich Wabenkörper mit einer Vielzahl von für das Abgas durchlässigen Kanälen mit einer katalytisch aktiven Beschichtung, welche die Oxidation von Kohlenwasserstoffen und Kohlenmonoxid begünstigt. Teilweise werden auch durch den Wabenkörper hindurchfliegende Rußpartikel entzündet und durch Abbrennen aus dem Abgas entfernt, jedoch ist dies nicht der Hauptzweck solcher Oxidationskatalysatoren.

Des weiteren gibt es Konzepte, um die bei hohen Temperaturen entstehenden Stickoxide im Abgas zu reduzieren, was beispielsweise durch ein zusätzliches Angebot an Kohlenwasserstoffen im Abgassystem erreicht werden kann. Kombinationen der drei beschriebenen Möglichkeiten wurden prinzipiell in Betracht gezogen, sind jedoch technisch und wirtschaftlich schwierig zu realisieren.

Bei Ottomotoren ist es bekannt, zum Beispiel aus der EP-B-0 412 103 einen vorderen Teilbereich eines Abgaskatalysators vor und/oder nach dem Start der Verbrennungsmaschine zu beheizen, um schon während der Kaltstartphase, in der der Schadstoffausstoß besonders groß ist, eine katalytische Umsetzung zu erreichen. Zahlreiche Ausführungsformen für elektrisch beheizbare Wabenkörper, die als solche vorderen Teilbereiche eingesetzt werden können, sind im Stand der Technik beschrieben.

Nach dem bei Dieselfahrzeugen der Rußausstoß durch konstruktive Maßnahmen an den Brennräumen und ein verbessertes Motormanagement verringert werden konnte, sind Oxidationskatalysatoren zur Reduzierung der nicht vermeidbaren Kohlenwasserstoffanteile ein bevorzugtes Konzept zur Verminderung des Schadstoffausstoßes. Dabei tritt jedoch ein bisher wenig beachtetes und ungelöstes Problem auf, nämlich das auch Oxidationskatalysatoren, die prinzipiell nicht als Filter konstruiert sind, sondern frei durchgängige Kanäle aufweisen, trotzdem bei den relativ niedrigen Temperaturen an ihre Oberfläche relativ schnell eine Rußschicht ablagern, die die Poren zusetzt und die katalytisch aktive Oberfläche vermindert oder sogar ganz abdeckt. Die Konsequenz ist, daß ein Oxidationskatalysator mit einer solchen dünnen Rußschicht praktisch keine katalytische Aktivität mehr entfalten kann.

Aus der JP 05 059 929 A ist ein Katalysator mit vorgeschaltetem Heizer bekannt, welcher von einer Rußschicht befreit werden kann, während ein Teil des Abgases durch eine Bypassleitung strömt. Die Heizleistung des vorgeschalteten Heizers muß zunächst auf das Abgas übertragen und dann die Rußschicht durch das aufgeheizte Abgas entzündet werden. Dies kann zur Erreichung der notwendigen Temperatur nur erfolgen, wenn ein Teil des Abgases während der Regeneration durch die Bypassleitung geleitet wird.

Während ein katalytischer Konverter ohne Rußablagerung bei ca. 300 bis 350° C seine katalytische Aktivität beginnt, bleibt bei dieser Temperatur die Rußschicht noch völlig unverändert. Diese Rußschicht beginnt erst ab ca. 600° C abzubrennen. Dies hat zur Folge, daß ein einmal verrußter Oxidationskatalysator selbst dann nicht aktiv wird, wenn er eine Temperatur von über 350° C erreicht. Da bei Dieselfahrzeugen Betriebszustände, zum Beispiel Kaltstart, Teillast und/oder Leerlauf, am häufigsten auftreten, bei denen die Abgastemperaturen im Bereich des Katalysators deutlich unter 600° C liegen, kann die Funktionsfähigkeit eines Oxidationskatalysators gerade in diesen Phasen nicht sichergestellt werden.

Aufgabe der vorliegenden Erfindung ist die Schaffung eines Verfahrens zur Verminderung des Schadstoffausstoßes eines Dieselmotors mit nachgeschaltetem Oxidationskatalysator bei Kaltstart, Teillast und/oder Leerlauf, welches eine frühzeitige katalytische Umsetzung sicherstellt.

Zur Lösung dieser Aufgabe wird erfindungsgemäß im Abgassystem eines Dieselmotors ein Oxidationskatalysator angeordnet, wecher frei durchgängige Kanäle und anströmseitig mindestens einen elektrisch beheizbaren Teilbereich aufweist, und wobei der elektrisch beheizbare Teilbereich vor und/oder nach dem Starten des Dieselmotors bis zu einer Temperatur aufgeheizt wird, bei der sich abgelagerter Ruß entzündet während das gesamte Abgas den Oxidationskatalysator durchströmt. Der elektrisch beheizbare Teilbereich kann ein kleiner gesonderter Wabenkörper oder ein in einen größeren Wabenkörper integrierter Teilbereich sein. Im allgemeinen wird dieser elektrisch beheizbare Teilbereich eine axiale Länge von 10 bis 50 mm aufweisen, einen Durchmesser zwischen dem halben Durchmesser und dem ganzen Durchmesser des Oxidationskatalysators haben und etwa 50 bis 200 cpsi (cells per square inch) aufweisen. Seine elektrische Leistungsaufnahme kann beispielsweise zwischen 500 und 2000 Watt liegen, jedoch sind auch kleinere oder größere Werte möglich.

Besonders vorteilhaft kann es auch sein, wenn der Oxidationskatalysator zwei oder mehrere axial hintereinander angeordnete elektrisch beheizbare Teilbereiche aufweist, welche nacheinander beheizt werden können, so daß eine maximale elektrische Leistung nicht überschritten wird, trotzdem aber der ganze Katalysator an seiner Oberfläche schrittweise von Ruß befreit werden kann. Geeignete Wabenkörperanardnungen hierzu sind z. B. in der EP-B-0 412 103 beschrieben.

Anders als bei bekannten Heizkatalysatoren, die vor allem den Schadstoffausstoß beim Kaltstart von Ottomotoren verringern sollen, kommt es bei der vorliegenden Erfindung darauf an, daß der elektrisch beheizbare Teilbereich möglichst schnell bis zu einer Temperatur aufgeheizt wird, bei der sich abgelagerter Ruß entzündet. Diese Temperatur ist wesentlich höher als die Temperatur, bei der die katalytische Umsetzung von Kohlenwasserstoffen bei freien katalytischen Oberflächen einsetzt. So muß der elektrisch beheizbare Teilbereich insbesondere auf eine Temperatur oberhalb etwa 600° C aufgeheizt werden. Da der Schadstoffausstoß gerade beim Kaltstart reduziert werden soll, wird der elektrisch beheizbare Teilbereich nach Möglichkeit schnell aufgeheizt, zum Beispiel in weniger als 20 sec., vorzugsweise innerhalb von weniger als 10 sec.

Sobald sich der auf dem elektrisch beheizbaren Teilbereich abgelagerte Ruß entzündet, läuft eine exotherme Reaktion ab, die jedoch, da es sich im allgemeinen um eine sehr dünne Rußschicht handelt, absolut gesehen keine große Energiefreisetzung bewirkt. Es kann daher nicht sichergestellt werden, daß sich das Abbrennen des Rußes über die gesamte Oberfläche des nachfolgenden Wabenkörpers ausbreitet, insbesondere dann nicht, wenn der elektrisch beheizbare Teilbereich gesondert angeordnet ist. Da jedoch baldmöglichst die gesamte Oberfläche zur Oxidation von Kohlenwasserstoffen zur Verfügung stehen soll, wird bei einer weiteren Ausführungsform der Erfindung vorgeschlagen, zusätzlichen Kraftstoff und/oder Luft in das Abgassystem des Dieselmotors einzuspeisen, um diese an dem bereits sehr heißen elektrisch beheizbaren Teilbereich umzusetzen und mit der damit entstehenden absolut sehr hohen exothermen Energie die Oberfläche des nachfolgenden Wabenkörpers vollständig von Ruß freizubrennen. Sofern der Dieselmotor zu diesem Zeitpunkt mit Luftüberschuß betrieben wird, genügt die zusätzliche Einspritzung von Kraftstoff, in anderen Fällen sollte zusätzlich Luft eingespeist werden. Bei dicken Rußschichten oder einem auf andere Weise mit Kraftstoff angereicherten Abgas kann auch die bloße Zufuhr von Luft genügen. Durch Messung oder Ableitung des Druckabfalls über dem Oxidationskatalysator aus anderen Meßgrößen kann gegebenenfalls eine Aussage getroffen werden über die Notwendigkeit der Beheizung, der Zufuhr von Kraftstoff bzw. Luft.

Die Wahl der Heizstrategie bietet bei Dieselmotoren eine Reihe von Möglichkeiten. Bei Dieselmotoren, die vorgeglüht werden, kann der elektrisch beheizbare Teilbereich schon während des Vorglühens des Dieselmotors aufgeheizt werden, soweit genügend elektrische Energie hierzu zur Verfügung steht. Bei durch die Fahrzeugbatterie begrenztem Energieangebot kann es günstiger sein, mit der elektrischen Beheizung erst unmittelbar nach dem Start des Dieselmotors zu beginnen, wenn zusätzliche Energie aus der Lichtmaschine zur Verfügung steht. Dafür kann die Aufheizung dann mit einem höheren Strom sehr viel schneller erfolgen.

Zur Steuerung oder Regelung des ganzen Verfahrens ist es besonders vorteilhaft, die Temperatur im oder nahe dem elektrisch beheizbaren Teilbereich zu messen und aus den Meßwerten das Ende der Beheizung und/oder Beginn und Ende einer zusätzlichen Einspritzung von Kraftstoff und/oder Luft zu bestimmen. Ein Temperaturfühler, der in den beheizbaren Teilbereich integriert oder außen an diesem befestigt ist, kann diese Aufgabe übernehmen. Aus dem Verlauf der an diesem Temperaturfühler gemessenen Temperaturkurve kann festgestellt werden, ob die katalytische Umsetzung von Kohlenwasserstoffen bereits bei 350° C einsetzt. In diesem Falle ist keine störende Rußschicht vorhanden und eine weitere Aufheizung des Oxidationskatalysators nicht erforderlich. Setzt die Reaktion bei dieser Temperatur noch nicht ein, so muß der beheizbare Teilbereich weiter aufgeheizt werden, wobei dann bei ca. 600° C eine sprunghafte Erhöhung der Temperatur festellbar sein muß, wenn die Rußschicht beginnt abzubrennen. Mit einem solchen Signal kann dann die Zufuhr von zusätzlichem Kraftstoff und/oder Luft gesteuert werden. Die Auswertung der Temperaturmeßergebnisse läßt auch Schlüsse auf die Funktionsfähigkeit zumindest des elektrisch beheizbaren Teilbereiches und seiner katalytisch aktiven Beschichtung zu.

Die vorliegende Erfindung kann natürlich mit weiteren Verfahren und Vorrichtungen zur Verminderung des Schadstoffausstoßes bei Dieselmotoren kombiniert werden, insbesondere mit Rußfiltern. Dabei kann die durch eine exotherme Reaktion im Oxidationskatalysator erzeugte Energie beispielsweise zum Zünden einer Rußschicht in einem nachfolgenden Rußfilter genutzt werden. Auch kann ein einem Rußfilter nachgeschalteter Oxidationskatalysator gemäß der vorliegenden Erfindung helfen, daß die beim periodischen Abbrennen des Rußfilters eventuell noch entstehenden Schadstoffe katalytisch fast vollständig umgesetzt werden.

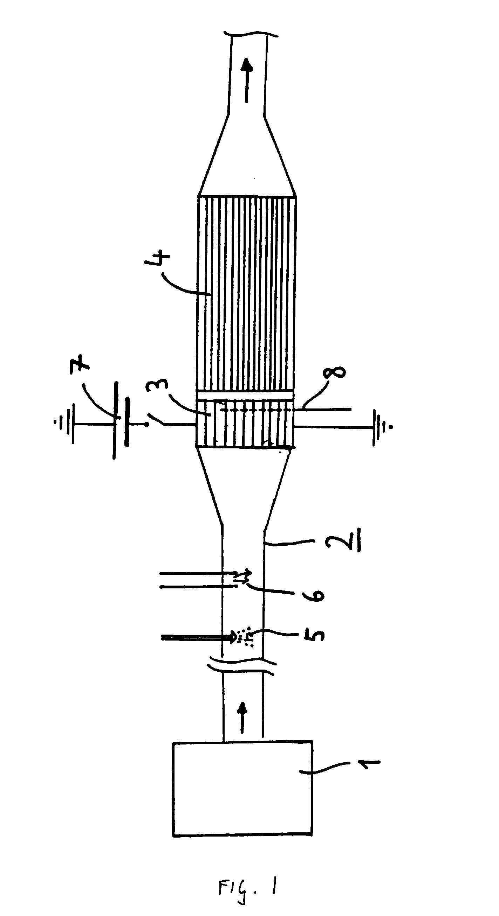

Ein Ausführungsbeispiel der Erfindung wird schematisch anhand der Zeichnung erläutert:

Die Abgase aus einem Dieselmotor 1 gelangen in ein Abgassystem 2, welches einen Oxidationskatalysator 4 mit einem antrömseitigen elektrisch beheizbaren Teilbereich 3 aufweist. Der elektrisch beheizbare Teilbereich kann wie bekannte Heizkatalysatoren für Ottomotoren gestaltet sein und wird von einer Stromquelle 7 mit einem elektrischen Strom von beispielsweise 50 bis 200 Ampere gespeist. Ein Temperaturfühler 8 mißt die Temperatur im oder am elektrisch beheizbaren Teilbereich 3, wodurch eine gezielte Regelung und Überwachung des Verfahrens möglich wird. Grundsätzlich kann das Verfahren aber auch mit einer reinen Zeitsteuerung ohne Temperaturfühler durchgeführt werden. Zwischen dem Dieselmotor 1 und dem beheizbaren Teilbereich 3 können eine Vorrichtung zum Einspritzen von Kraftstoff 5 oder eine Vorrichtung zum Zuführen von Zusatzluft 6 vorgesehen werden, um nach dem Aufheizen des elektrisch beheizbaren Teilbereiches 3 dort eine exotherme Reaktion zwischen Kraftstoff und Luft hervorzurufen, mit welcher der gesamte Oxidationskatalysator 4 von Ruß freigebrannt wird. Bei diesem Freibrennen erreicht der Oxidationskatalysator sehr schnell eine schon weit über der für die katalytische Oxidation notwendigen Temperatur liegende Temperatur, so daß unmittelbar danach die volle Wirksamkeit zum Oxidieren von Kohlenwasserstoffen vorliegt.

Mit dem erfindungsgemäßen Verfahren kann erreicht, werden, daß schon nach 10 oder 20 sec nach dem Start des Dieselmotors die volle katalytische Wirkung des Oxidationskatalysators zur Verfügung steht und danach nur noch entgiftete Abgase an die Umwelt abgegeben werden, auch wenn die Betriebsbedingungen des Dieselmotors bei Kaltstart, Teillast und/oder Leerlauf an sich eine genügend hohe Temperatur des Oxidationskatalysators nicht gewährleisten würden.

## Patentansprüche

1. Verfahren zur Verminderung des Schadstoffausstoßes eines Dieselmotors (1) mit nachgeschaltetem Oxidationskatalysator (4) bei Kaltstart, Teillast und/oder Leerlauf, wobei der Oxidationskatalysator (4) frei durchgängige Kanäle und anströmseitig mindestens einen elektrisch beheizbaren Teilbereich (3) aufweist, und wobei der elektrisch beheizbare Teilbereich (3) vor und/oder nach dem Starten des Dieselmotors (1) bis zu einer Temperatur aufgeheizt wird, bei der sich abgelagerter Ruß entzündet, während das gesamte Abgas den Oxidationskatalysator (4) durchströmt.

2. Verfahren nach Anspruch 1, dadurch gekennzeichnet,
daß der elektrisch beheizbare Teilbereich (3) auf eine Temperatur oberhalb etwa 600° C aufgeheizt wird.

3. Verfahren nach Anspruch 1 oder 2, dadurch gekennzeichnet,
daß der elektrisch beheizbare Teilbereich (3) innerhalb von weniger als 20 sec, vorzugsweise innerhalb von weniger als 10 sec aufgeheizt wird.

4. Verfahren nach Anspruch 1, 2 oder 3 dadurch gekennzeichnet,
daß bei oder nach Erreichen einer Temperatur im elektrisch beheizbaren Teilbereich (3), bei der sich abgelagerter Ruß entzündet, zusätzlicher, Kraftstoff (5) und/oder Luft (6) in das Abgassystem (2) des Dieselmotors (1) eingespeist werden, um durch eine exotherme Reaktion auch Ruß auf weiter stromab liegenden Oberflächen des Oxidationskatalysators (4) abzubrennen.

5. Verfahren nach einem der vorhergehenden Ansprüche,
dadurch gekennzeichnet,
daß der elektrisch beheizbare Teilbereich (3) während des Vorglühens des Dieselmotors (1) aufgeheizt wird.

6. Verfahren nach einem der Ansprüche 1 bis 4, dadurch gekennzeichnet,
daß der elektrisch beheizbare Teilbereich (3) unmittelbar nach dem Start des Dieselmotors (1) aufgeheizt wird.

7. Verfahren nach einem der vorhergehenden Ansprüche, dadurch gekennzeichnet,
daß der Oxidationskatalysator (4) mehrere, in Strömungsrichtung hintereinanderliegende, elektrisch beheizbare Teilbereiche enthält, welche nacheinander elektrisch beheizt werden.

8. Verfahren nach einem der vorhergehenden Ansprüche,
dadurch gekennzeichnet,
daß die Temperatur im oder nahe dem elektrisch beheizbaren Teilbereich (3) gemessen (8) und aus den Meßwerten das Ende der Beheizung und/oder Beginn und Ende einer zusätzlichen Einspritzung von Kraftstoff (5) und/oder Luft (6) bestimmt werden.

9. Verfahren nach einem der vorhergehenden Ansprüche, dadurch gekennzeichnet,
daß der Druckverlust über dem Oxidationskatalysator direkt oder indirekt bestimmt und daraus die Notwendigkeit einer zusätzlichen Beheizung und/oder der Zufuhr von Kraftstoff bzw. Luft abgeleitet wird.

10. Verfahren nach einem der vorhergehenden Ansprüche,
dadurch gekennzeichnet,
daß das Verfahren bei einem Oxidationskatalysator angewandt wird, der in Reihe mit einem Rußfilter geschaltet ist, vorzugsweise diesem vorgeschaltet.

## Claims

1. A method of reducing pollution emission from a diesel engine (1) with a downstream-disposed oxidation catalytic converter (4) upon cold start, under partial load and/or at idle, wherein the oxidation catalytic converter (4) has passages through which exhaust gas can freely flow and at the afflux end has at least one electrically heatable portion (3), and wherein before and/or after starting of the diesel engine (1) the electrically heatable portion (3) is heated up to a temperature at which deposited soot is ignited while all the exhaust gas is flowing through the oxidation catalytic converter (4).

2. A method according to claim 1 characterised in that the electrically heatable portion (3) is heated up to a temperature of above about 600°C.

3. A method according to claim 1 or claim 2 characterised in that the electrically heatable portion (3) is heated up within less than 20 seconds, preferably within less than 10 seconds.

4. A method according to claim 1, claim 2 or claim 3 characterised in that upon or after the attainment of a temperature in the electrically heatable portion (3) at which deposited soot is ignited, additional fuel (5) and/or air (6) is fed into the exhaust gas system (2) of the diesel engine (1) in order also to burn away soot on surfaces of the oxidation catalytic converter (4) which are further downstream, by virtue of an exothermic reaction.

5. A method according to one of the preceding claims characterised in that the electrically heatable portion (3) is heated up during preliminary glow heating of the diesel engine (1).

6. A method according to one of claims 1 to 4 characterised in that the electrically heatable portion (3) is heated up immediately after starting of the diesel engine (1).

7. A method according to one of the preceding claims characterised in that the oxidation catalytic converter (4) includes a plurality of electrically heatable portions which are disposed in succession in the flow direction and which are electrically heated in succession.

8. A method according to one of the preceding claims characterised in that the temperature is measured (8) in or near the electrically heatable portion (3) and the end of the heating effect and/or the beginning and end of an additional injection of fuel (5) and/or air (6) are determined from the measured values.

9. A method according to one of the preceding claims characterised in that the pressure drop across the oxidation catalytic converter is directly or indirectly determined and the need for additional heating and/or the feed of fuel or air respectively is derived therefrom.

10. A method according to one of the preceding claims characterised in that the method is used in connection with an oxidation catalytic converter which is connected in series with a soot filter and which is preferably connected upstream thereof.

## Revendications

1. Procédé destiné à réduire l'émission de matières nocives lors du démarrage à froid, à charge partielle et/ou en marche à vide d'un moteur diesel (1), en aval duquel est disposé un convertisseur catalytique à oxydation (4), le convertisseur catalytique à oxydation (4) comportant des canaux pouvant être librement traversés, et, du côté amont, au moins une zone partielle (3) pouvant être chauffée électriquement, et la zone partielle (3) pouvant être chauffée électriquement étant portée avant et/ou après le démarrage du moteur diesel (1) à une température à laquelle le noir de carbone déposé s'enflamme pendant que l'ensemble des gaz d'échappement traverse le convertisseur catalytique à oxydation (4).

2. Procédé selon la revendication 1, caractérisé en ce que la zone partielle (3) pouvant être chauffée électriquement est portée à une température supérieure à 600 °C environ.

3. Procédé selon la revendication 1 ou 2, caractérisé en ce que la zone partielle (3) pouvant être chauffée électriquement est portée à température en l'espace de moins de 20 sec, de préférence en l'espace de moins de 10 sec.

4. Procédé selon les revendications 1, 2 ou 3, caractérisé en ce que, lorsque ou après qu'une température a été atteinte dans la zone partielle (3) pouvant être chauffée électriquement, à laquelle du noir de carbone déposé s'enflamme, du carburant (5) supplémentaire et/ou de l'air (6) sont injectés dans le système des gaz d'échappement (2) du moteur diesel (1), afin de brûl.er par une réaction exothermique également du noir de carbone sur des surfaces situées plus en aval du convertisseur catalytique à oxydation (4).

5. Procédé selon l'une quelconque des revendications précédentes, caractérisé en ce que la zone partielle (3) pouvant être chauffée électriquement est portée à température pendant le préchauffage du moteur diesel (1).

6. Procédé selon l'une quelconque des revendications 1 à 4, caractérisé en ce que la zone partielle (3) pouvant être chauffée électriquement est portée à température immédiatement après le démarrage du moteur diesel (1).

7. Procédé selon l'une quelconque des revendications précédentes, caractérisé en ce que le convertisseur catalytique à oxydation (4) comporte plusieurs zones partielles pouvant être chauffées électriquement situées les unes derrière les autres dans le sens de l'écoulement, qui sont successivement chauffées électriquement.

8. Procédé selon l'une quelconque des revendications précédentes, caractérisé en ce que la température est mesurée (8) dans ou à proximité de la zone partielle (3) pouvant être chauffée électriquement, et en ce que la fin du chauffage et/ou le début et la fin d'une injection supplémentaire de carburant (5) et/ou d'air (6) sont déterminés à partir des valeurs de mesure.

9. Procédé selon l'une quelconque des revendications précédentes, caractérisé en ce que la perte de charge au-dessus du convertisseur catalytique à oxydation est déterminée directement ou indirectement, et en ce qu'ensuite est dérivée la nécessité d'un chauffage supplémentaire et/ou de l'injection de carburant ou d'air.

10. Procédé selon l'une quelconque des revendications précédentes, caractérisé en ce que le procédé est mis en oeuvre pour un convertisseur catalytique à oxydation qui est branché en série avec un filtre de noir de carbone, de préférence en amont de ce dernier.
